# EUROPEAN PATENT SPECIFICATION

(11) **EP 3 170 383 B1**
(45) Date of publication and mention of the grant of the patent: **29.01.2020**
(21) Application number: 16199384.5
(22) Date of filing: 17.11.2016
(51) Int. Cl.: A01D 33/10, A01D 46/24, B65G 21/14, B65G 69/16

(54) **MACHINE AND METHOD FOR HARVESTING FRUITS**
MACHINE UND VERFAHREN ZUM ERNTEN VON OBST
DISPOSITIF ET PROCÉDÉ POUR LA RÉCOLTE DE FRUITS

(30) Priority: 17.11.2015 IT UB20155665
(43) Date of publication of application: 24.05.2017
(73) Proprietor: Billo S.r.l., 35040 Merlara (PD) (IT)
(72) Inventor: BILLO, Enrico, 35040 Merlara (PD) (IT); MELOTTO, Lorenzo, 35040 Urbana (PD) (IT)
(74) Representative: Gallo, Luca

(56) References cited:
- EP-A1- 2 826 733
- WO-A1-2010/093638
- US-A- 3 147 846
- US-A- 4 501 350
- US-A- 5 772 004
- US-B1- 8 546 704

## Description

### Application field

The present invention relates to a machine for harvesting fruit and to an method of operating said machine.

The concerned machine and method relate to the industrial field of the production of farming machines, and are intended to be advantageously used in orchards for harvesting fruit, in particular for harvesting apples.

Advantageously, the concerned machine is intended to advance between the orchard rows in an either self-propelled or towed manner to receive the fruit harvested from the trees by the operators and to convey such fruit into appropriate collection boxes.

### Background art

As known, self-propelled farming machines, which are used during the fruit harvest to convey the fruit picked from the trees by the operators into the collection boxes, are common on the market.

More in detail, an example of machine for harvesting fruit of the known type comprises a support frame provided with four wheels and a motor mounted on the support frame which can be driven to advance the machine along the fruit tree rows.

The machine further comprises a collection box abutting on the support frame and two conveyor belts arranged in series on the support frame and susceptible of receiving the fruit harvested from the trees by the operators to convey such fruit into the collection box.

More in detail, the aforesaid conveyor belts of the machine comprise a horizontal belt, which extends between an outer end and an inner end arranged over the collection box, and is susceptible of receiving the fruit harvested directly from the operators or from further auxiliary belts arranged either at the outer end of the horizontal belt or in intermediate position between the two ends of the horizontal belt itself.

The conveyor belts of the machine further comprise a vertical belt, which extends between an upper end, arranged at the inner end of the horizontal belt to receive the fruit from the latter, and a lower end arranged within the collection box to deposit the fruit therein.

Each conveyor belt of the machine is provided on its outer surface with protruding appendixes adapted to retain the fruit still so that the pieces do not knock into one another and so that the fruit, when it is on the vertical belt slide, does not slip into the collection box before reaching the lower end of the vertical belt itself.

Operatively, the lower end of the vertical belt is initially arranged near the bottom of the box to abut the fruit on the bottom thereof without bruising it. Upon the accumulation of fruit in the collection box, the vertical belt is gradually raised to keep its lower end substantially at the level of the fruit deposited in the collection box.

For this purpose, the machine further comprises moving means obtained, for example, with hydraulic cylinders arranged to control the movement of the vertical belt to vary the level thereof.

The machine of known type described briefly above has been proven not to be free of drawbacks.

A first drawback is due to the fact that the arrangement of two separate conveyor belts makes the machine constructionally complex and costly to be manufactured.

A further drawback is due to the fact that the raising of the vertical belt of the machine implies a considerable dimension in height with the risk that the raised vertical belt may interfere with the guy lines of the orchard protection nets, for example.

In order to solve the aforesaid drawbacks at least in part, machines have been introduced on the market for harvesting fruit of known type provided with a single conveyor belt to convey the fruit to the collection box.

For example, a machine for harvesting fruit is known from Italian patent n. VR2013A000169 having a single conveyor belt, which is provided with a first substantially horizontal section, intended to receive the harvested fruit, and a second substantially vertical section, adapted to deposit the fruit in the collection box and connected to the first section by means of a third arc-shaped connection section by means of multiple guide wheels idly fixed to the support frame of the machine.

More in detail, the conveyor belt extends between a first motorized roller, arranged at an outer end of the first section, and a second driven roller, arranged at a lower end of the second section.

The machine further comprises a hydraulic cylinder connected to the aforesaid first roller which can be driven to move such roller towards either the outside or the inside of the machine in order to move, by means of the conveyor belt, the second roller respectively either upwards or downwards, so as to vary the level of the lower end of the second section of the conveyor belt itself as a consequence.

The machine further comprises a tensioning device connected to the support frame and comprising a series of pneumatic cylinders acting on the second roller to push it downwards, in order to keep the conveyor belt taut at the different levels at which the lower end of the second section of the conveyor belt itself is arranged.

Also the latter solution of known type described in patent application n. VR2013A000169 has been proven to not be free from drawbacks in practice. In particular, the use of the hydraulic cylinder and of the tensioning device with pneumatic cylinders for moving the conveyor belt implies drawbacks caused by the high tensioning load to which the conveyor belt itself is subjected.

A further drawback of the machine of known type described in patent application n. VR2013A000169 is due to the fact that the lower end of the second section of the conveyor belt can release the fruit only in the center of the collection box, with consequent difficulties in depositing the fruit in the corners of the collection box, thus filling the collection box in a non-uniform and inefficient manner.

Patent US 3,147,846 describes a further example of machine of known type for harvesting fruit, which comprises a belt conveyor provided with a rigid, substantially L-shaped frame extending between a first end, hinged to the support frame of the machine and a second end intended to be inserted in the collection box. Furthermore, the machine comprises a linear actuator connected to the rigid frame of the belt conveyor and which can be actuated to rotate the belt conveyor about its first end so as to raise the second end (inserted in the collection box) gradually upon the accumulation of fruit inside the collection box itself.

The latter solution of known type described in patent application n. US 3,147,846 has also been proven not to be free from drawbacks in practice. For example, a drawback is due to the fact that the movement of the rigid frame of the conveyor belt implies a considerable dimension in height with the risk that the raised vertical belt interferes with the guy lines of the orchard protection nets. US 8546704 discloses a soft-drop conveyor system comprising the features of the preamble of claim 1.

### Disclosure of the invention

It is the main object of the present invention to solve the drawbacks exhibited by the known type solutions, by providing a machine for harvesting fruit and a method of operating said machine operatively which are very reliable.

It is another object of the present invention to provide a machine for harvesting fruit and a method of operating said machine which allow to convey the fruit into the collection boxes in a very efficient and reliable manner.

It is another object of the present invention to provide available a machine for harvesting fruit and a method of operating said machine which allow to fill the collection boxes without bruising the fruit.

It is another object of the present invention to provide available a machine for harvesting fruit and a method of operating said machine which allow to fill the collection boxes in an even and uniform manner.

It is another object of the present invention to provide a machine for harvesting fruit which is constructionally simple and cost-effective to be manufactured.

### Brief description of the drawings

The technical features of the invention according to the aforesaid objects can be clearly inferred from the content of the following claims, and its advantages will become more apparent from the detailed description that follows, made with reference to the appended drawings, which illustrate some embodiments by way of non-limitative examples only, in which:
- figure 1 is a perspective top view of the machine for harvesting fruit according to the present invention;
- figure 2 is a perspective view of a detail of the machine shown in figure 1, relative to a conveyor belt;
- figure 3 shows a side view of the conveyor belt shown in figure 2;
- figure 4 shows a detail of the belt conveyor at an inlet end of the latter;
- figure 5 shows a further detail of the belt conveyor at an outlet end of the latter;
- figures 6A-6D show the belt conveyor in four different operative positions of the latter;
- figure 7 shows a detail of the belt conveyor according to a first embodiment of the present invention;
- figure 8 shows a detail of the belt device according to a first embodiment of the present invention.

### Detailed description of a preferred embodiment

With reference to the accompanying drawings, reference numeral 1 indicates the fruit harvesting machine which is the object of the present invention as a whole.

The machine 1 is adapted to be advantageously employed in orchards for harvesting fruit, in particular apples, and is preferably intended to advance between the orchard rows to receive the fruit picked from the trees by operators and to convey such fruit into specific collection boxes.

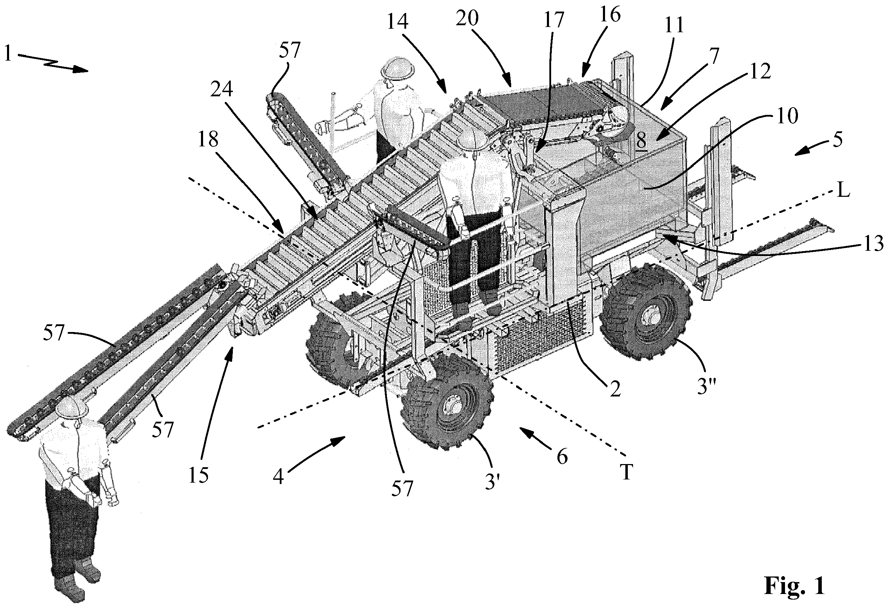

According to the embodiment shown in figure 1, the machine 1 comprises a support structure 2 intended to be abutted against the ground, in particular by means of two or more wheels 3', 3".

Advantageously, the support structure 2 of the machine 1 extends according to a longitudinal axis L thereof between a front side 4 and a rear side 5, and extends according to a transversal axis T thereof, orthogonal to the longitudinal axis L, between two lateral sides 6 which are substantially parallel to each other.

Preferably, the support structure 2 is provided with four aforesaid wheels 3', 3", of which, in particular, one pair of front wheels 3', arranged at the front side 4 of the support structure 2, and one pair of rear wheels 3", arranged at the rear side 5 of the support structure 2 itself. Advantageously, the machine 1 comprises at least one motor (not shown in the accompanying figures) mounted on the support structure 2 and mechanically connected to at least one pair of the wheels 3', 3" to control the advancement of the machine 1 on the ground.

According to the invention, the machine 1 comprises a collection box 7 positioned on the support structure 2, preferably at the rear side 5 of the support structure 2 itself. The collection box 7 is provided with an internal space 8 in which the fruit is intended to be arranged. More in detail, the collection box 7 comprises a bottom wall 9 placed in the lower closing of the internal space 8 and a lateral wall 10 extending from the bottom wall 9 to close the side of the internal space 8 itself. Advantageously, the collection box 7 is parallelepiped-shaped with the lateral wall 10 provided with multiple sides (e.g. four), which extends orthogonally to the bottom wall 9.

The collection box 7 is also provided with an upper edge 11 delimiting an access opening 12 through which the fruit is susceptible of being deposited in the internal space 8 of the collection box 7 itself.

Advantageously, the support structure 2 of the machine 1 is provided with an abutting seat 13 on which the collection box 7 is arranged. Such an abutting seat 13 is preferably provided with a horizontal rotatable base (not shown in the accompanying figures), which can be driven to rotate about a vertical rotation axis to rotate the collection box 7 itself rotate in order to distribute the fruit uniformly in the collection box 7 itself.

The machine 1 comprises a belt conveyor 14 mounted on the support structure 2 and extending between an inlet end 15, at which the belt conveyor 14 is preferably susceptible of receiving the fruit, and an outlet end 16, from which the fruit is susceptible of exiting from the belt conveyor 14 to be deposited in the internal space 8 of the collection box 7.

In particular, the inlet end 15 of the belt conveyor 14 is deposited at the front side 4 of the support structure 2 and the outlet end 16 of the belt conveyor 14 is arranged at the rear side 5 of the support structure 2 particular at the abutting seat 13 to deposit the fruit in the collection box 7, as described in detail below.

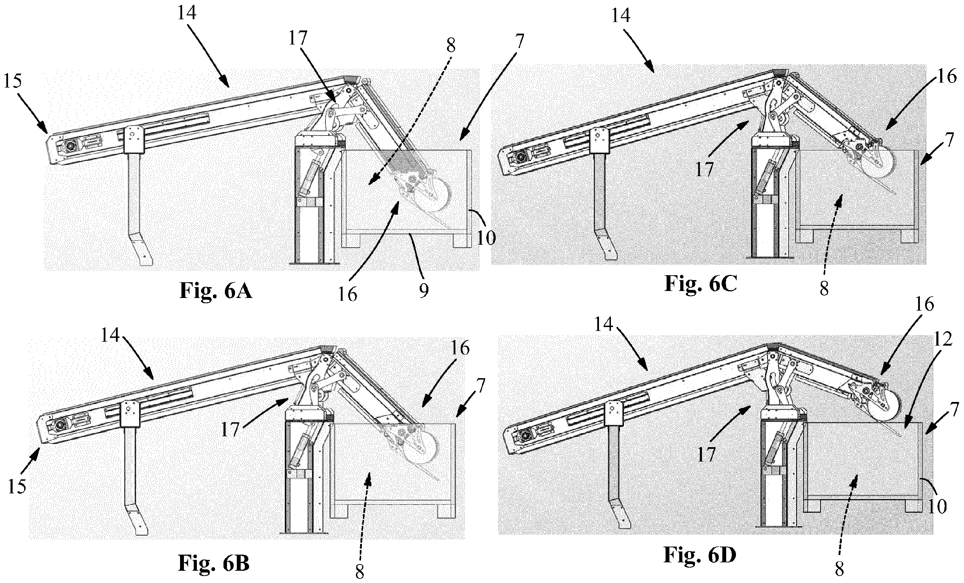

Furthermore, the machine 1 comprises movement means 17 operatively connected to the belt conveyor 14 and arranged to move it between a first operative configuration (shown in the example in figure 6A), in which the outlet end 16 of the belt conveyor is arranged in the internal space 8 of the collection box 7 at the bottom wall 9 of the collection box 7 itself, and a second operative configuration (shown in the example in figure 6D), in which the outlet end 16 of the belt conveyor 14 is arranged at the access opening 12 of said collection box 7.

Operatively, when the collection box 7 is empty, the belt conveyor 14 is arranged in its first operative configuration so as to arrange the outlet end 16 of the latter near the bottom wall 9 of the collection box 7, in order to deposit the fruit in the latter without bruising it.

After having accumulated the fruit in the collection box 7, the movement means 17 control a gradual lifting of the outlet end 16 of the belt conveyor 14 so as to arrange such an outlet end 16 over the upper layer of the fruit accumulated in the collection box 7, in order to arrange further fruit over such upper layer without bruising the fruit itself.

Advantageously, the movement means 17 control the movement of the belt conveyor 14 to take it to the second operative configuration when the collection box 7 is substantially completely filled with fruit, arranging, in particular, the outlet end 16 over the access opening 12 of the collection box 7 itself.

Preferably, the movement means 17 are arranged to move the conveyor belt 14 progressively in subsequent steps, in particular, so as to raise the outlet end 16 to different levels taking the outlet end 16 itself to a higher level than the previous level whenever the upper layer of fruit reaches the outlet end 16.

According to the idea underlying the present invention, the belt conveyor 14 comprises a first movable frame 18, which extends along a first extension direction X (preferably rectilinear) between the aforesaid inlet end 15 and a first connection end 19, and a second movable frame 20 which extends along a second extension direction Y (preferably rectilinear) between the aforesaid outlet end 16 and a second connection end 21 constrained to the first connection end 19 of the first movable frame 18.

The second connection end 21 of said second movable frame 20 is rotatably constrained to the first connection end 19 of the first movable frame 18 around a first axis W1.

In particular, the first and the second extension directions X and Y of the first and second movable frames 18 and 20, in particular, are substantially parallel to a lying plane parallel to the longitudinal axis L of the support structure 2 and orthogonal to the transversal axis T of the latter, "substantially parallel" meaning that each extension direction X, Y defines an angle comprised between approximately 0° and 10°, e.g. approximately 5°, with the aforesaid lying plane.

The first axis W1 is preferably orthogonal to the extension directions X, Y of the movable frames 18, 20 and is arranged in particular horizontally.

Advantageously, the belt conveyor further comprises a first rotatable roller 22 mounted on the first movable frame 18 and arranged at the inlet end 15 and a second rotatable roller 23 mounted on the second movable frame 20 and arranged at the outlet end 16.

The conveyor belt 14 further comprises a movable belt 24 extending between the inlet end 15 and the outlet end 16 of the belt conveyor 14 itself and wound around the first rotatable roller 22 and the second rotatable roller 23.

The aforesaid movable belt 24 can be slidingly driven along the movable frames 18, 20 to convey the fruit towards the outlet end 16, in order to transport the fruit itself into the collection box 7.

Preferably, the machine 1 comprises driving means (known in themselves to a person skilled in the art) mechanically connected to one of the rotatable roller 22, 23 to drive it rotatably in order to move the movable belt 24.

Appropriately, the movable belt 24 is provided with two longitudinal edges thereof which are parallel to each other and mutually delimit an outer surface on which the fruit to be conveyed is susceptible of being deposited.

Advantageously, the movable belt 24 is provided on an outer surface thereof with a plurality of seats 25 arranged in sequence according to extension directions X, Y of the movable frames 18, 20 of the belt conveyor 14 and are separated one from the next by a protuberance 26 projecting from the outer surface of the movable belt 24 itself. The seats 25 are intended to accommodate the fruit which is deposited on the movable belt 24 so as to feed (following the movement of the movable belt 24) such fruit towards the outlet end 16 of the conveyor belt 14.

Advantageously, each movable frame 18, 20 comprises two corresponding longitudinal side panels 27, 28 between which the movable belt 24 is arranged.

More in detail, the first movable frame 18 comprises two first longitudinal side panels 27 which extend mutually parallel, according to the first extension direction X, between the inlet end 15 and the first connection end 19.

More in detail, the second movable frame 20 comprises two second longitudinal side panels 28 which extend mutually parallel, according to the second extension direction X, between the outlet end 16 and the second connection end 21.

Preferably, the first and second rotatable rollers 22, 23 of the first and second movable frames 18, 20 are rotatably connected respectively to the first and second longitudinal side panels 27, 28 at the inlet end 15 and the outlet end 16 of the conveyor belt 14 respectively.

In particular, each rotatable roller 22, 23 extends axially according to a revolution axis orthogonal to the extension direction X, Y of the corresponding movable frame 18, 20 and is preferably rotatably supported at its ends by the longitudinal side panels 27, 28 of the corresponding movable frame 18, 20 itself.

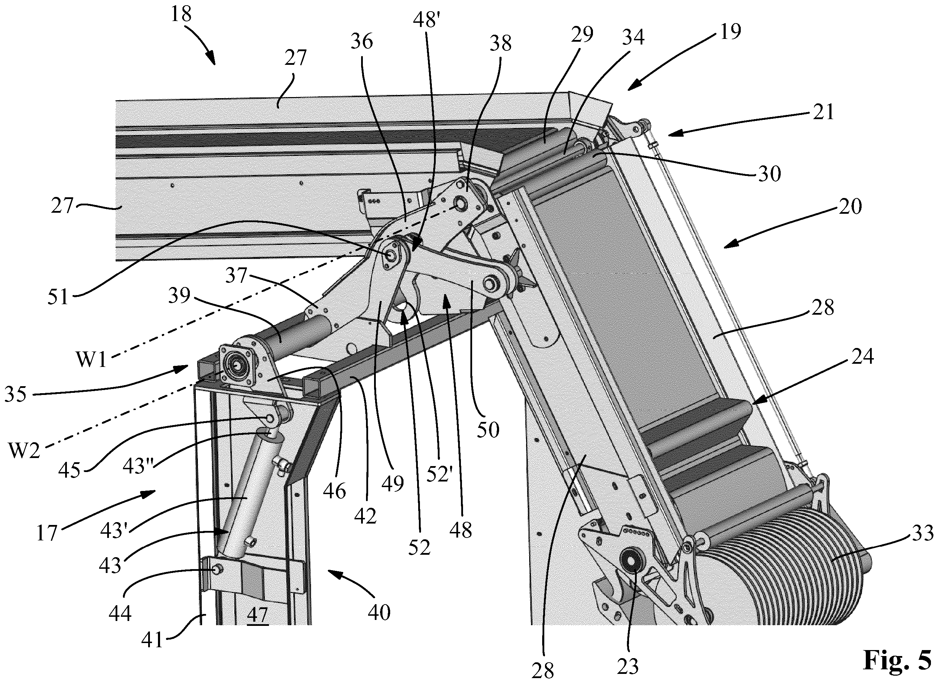

Advantageously, the belt conveyor 14 comprises a first and a second transmission roller 29, 30, which are rotatably mounted (in particular in an idle manner) at the first connection end 19 of the first movable frame 18 and at the second connection end 21 of the second movable frame 20, respectively, and are arranged axially parallel respectively to the first and second rotatable rollers 22, 23 (as shown in the example in figure 5 from where the movable belt 24 departs was removed to make some internal parts of the conveyor belt 14 visible).

The transmission rollers 29, 30 are intended to receive in an abutting manner the movable belt 24 to guide it while bending it in a straddling manner between the first and second movable frames 18 and 20.

According to a different embodiment of the present invention not shown in the accompanying figures, instead of only one movable belt extended between the inlet end 15 and the outlet end 16 of the belt conveyor 14 the latter comprises more movable belts, e.g. two, of which a first movable belt mounted on the first movable frame 18 and extending between the inlet end 15 and the first connection end 19, and a second movable belt mounted on the second movable frame 20 and extending between the second connection end 21 and the outlet end 16.

Advantageously, the first movable frame 18 extends from the inlet end 15 to the first connection end 19 in an ascending manner (according to the embodiments shown in the accompanying figures) or otherwise in a substantially horizontal manner.

In particular, the first connection end 19 of the first movable frame 18 and the second connection end 21 of the second movable frame 20 are arranged at a higher level than that of the access opening 12 of the collection box 7.

Advantageously, the second movable frame 20 extends from the outlet end 16 to the second connection end 21 in a descending manner in order to convey the fruit from the first connection end 19 to the collection box 7.

Preferably, the second movable frame 20 is provided with a retaining sheet 31 arranged on an upper side of the second frame 20 itself between the second connection end 21 and the outlet end 16 and arranged to prevent the fruit arranged in the seats 25 of the movable belt 24 from rolling downwards because of the descending gradient of the second movable frame 20.

Advantageously, the second movable frame 20 is provided with a chute 32 hinged at the outlet end 16 and adapted to receive the fruit from the movable belt 24 to accompany it into the internal space 8 of the collection box 7.

Preferably, the second movable frame 20 is provided with a brush 33 arranged at the outlet end 16 and adapted to intercept the fruit to attenuate the falling speed thereof into the collection box 7.

According to the invention, the movement means 17 of the machine 1 are arranged for driving the second movable frame 20 to move according to a trajectory having at least one vertical component and at least one horizontal component between the first operative configuration and the second operative configuration of the belt conveyor 14, in particular for the purpose of maintaining the second movable frame 20 within the access opening 12 of the collection box 7.

The movement means 17 are arranged for driving the second movable frame 20 to rotate around the aforesaid first axis W1 between the first operative configuration and the second operative configuration of the belt conveyor 14.

The movement according to the aforesaid trajectory (and in particular the rotation) of the second movable frame 20 driven by the movement means 17 prevents the second frame 20 from knocking into the lateral wall 10 of the collection box 7.

Furthermore, the aforesaid movement of the second movable frame 20 advantageously allows to vary the distance of the outlet end 16 from the lateral wall 10 of the collection box 7 in order to distribute the fruit evenly inside the collection box 7 itself, as described in detail below with reference to the method of operating the concerned machine 1.

Advantageously, the first movable frame 18 of the belt conveyor 14 is rotatably constrained to the second movable frame 20 by means of a first pin 34 aligned with the first axis W1. Such first pin 34 is preferably hinged to the connection ends 19, 21 of the movable frames 18, 20, and in particular to the longitudinal side panels 27, 28 of the latter.

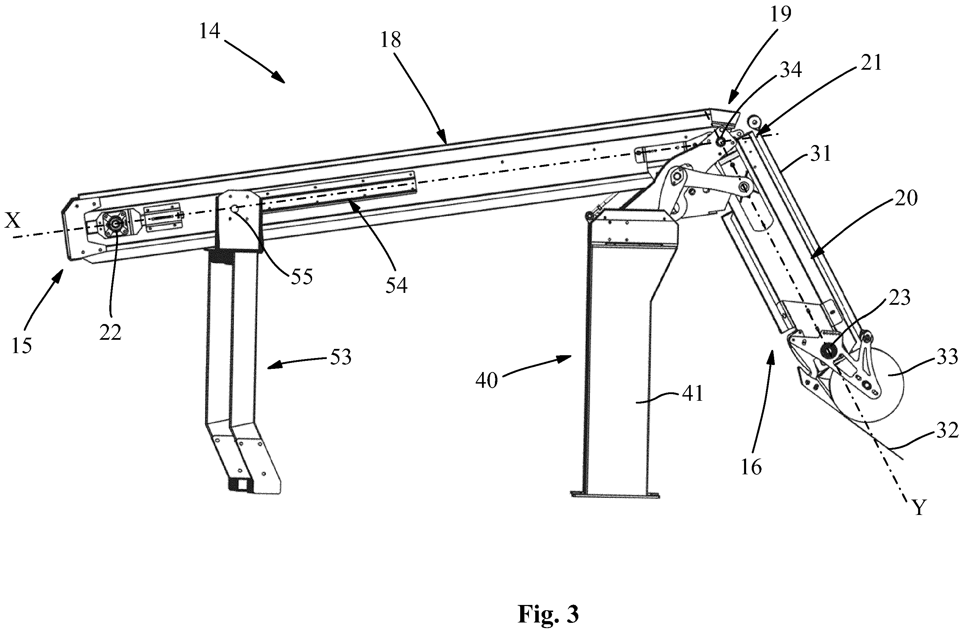

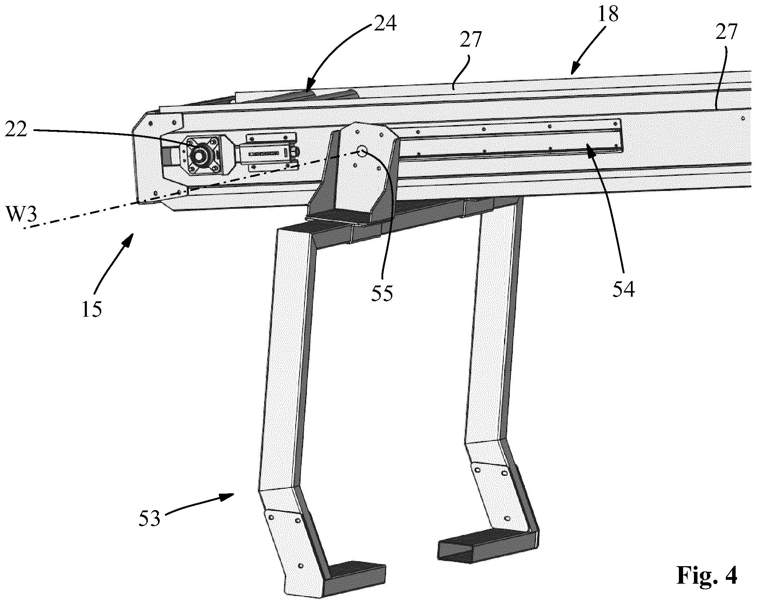

With reference to the embodiment shown in the accompanying figures 1-6D, the movement means 17 comprise a first movement device 35 connected to the first pin 34 and arranged to move the latter along a displacement line having at least one vertical component and at least one horizontal component between the first and second operative components of the belt conveyor 14, in particular in order to displace the belt conveyor 14 both horizontally and vertically.

Preferably, the first movement device 35, by being arranged to move the first pin 34 which connects the first movable frame 18 to the second movable frame 20 is adapted to determine a movement of both the movable frames 18, 20.

In particular, with reference to the embodiment shown in figure 5, the first movement device 35 comprises at least one lever 36 provided with a first portion 37 hinged to the support structure 2 of the machine 1 about a second axis W2 parallel to the first axis W1, and with a second portion 38 connected to the first pin 34 of the belt conveyor 14.

In particular, the machine 1 comprises a second pin 39 arranged aligned with the aforesaid second axis W2 and by means of which the lever 36 is hinged to the support structure 2. Appropriately, the second pin 39 carries fixed the first portion 37 of the lever 36. Advantageously, the support structure 2 comprises a support mounting 40 on which the movement means 17 and the belt conveyor 14 are mounted.

Preferably, the aforesaid support mounting 40 comprises two columns 41, which are in particular connected on top by at least one beam 42.

Appropriately, the second pin 39 is rotatably mounted at the upper ends of the columns 41 of the supporting mounting 40, extending preferably straddling such columns 41. In particular, the support mounting 40 supports the second pin 39 with the lever 36 fixed to the latter, which lever 36 supports in turn the movable frames 18, 20 of the conveyor belt 14 in particular by means of the first pin 34.

Preferably, the first movement device 35 comprises two aforesaid levers 36, each of which is arranged at the respective first and second longitudinal sides 27 and 28 of each movable frame 18, 20 and is connected to a corresponding extreme part of the first pin 34. Advantageously, the movement means 17 comprise at least a first actuator 43 connected to the lever 36 and adapted to drive the latter to rotate about its second axis W2 to move the first pin 34 along the aforesaid movement line, which thus extends according to an arc of circumference having center in the second axis W2 itself.

In particular, such an arc of circumference of the displacement line of the first pin 34 determines a displacement of the movable frames 18, 20 of the belt conveyor 14 having a horizontal component and a vertical component.

Preferably, the vertical component of the aforesaid displacement of the movable frames 18, 20, during the movement of the belt conveyor 14 from the second operative configuration determines at least in part a raising of the outlet end 16, so that the latter is over the upper layer of fruit arranged in the collection box 7 without being covered by such fruit.

Advantageously, with reference to the embodiment in figure 5, the first actuator 43 preferably comprises a hydraulic cylinder, is provided with a first end 44 connected to the support structure 2 of the machine 1 and with a second end 45 mechanically connected to the lever 36.

More in detail, preferably, the first actuator 43 comprises a skirt 43' provided with the aforesaid first end 44 hinged to the support structure 2, and a rod 43" slidingly inserted in the skirt and provided with the second end 45 connected to the lever 36.

Advantageously the second end 45 of the first actuator 43 is hinged to an actuating lever 46 which is fixed to the second pin 39 to rotate the latter.

Preferably, the first actuator 43 is arranged inside a cavity 47 of one of the columns 41 of the support mounting 40.

Advantageously, the movement means 17 of the machine 1 comprise a second movement device 48 hinged to the second movable frame 20 of the belt conveyor 14 and adapted to drive such second movable frame 20 to rotate about the first axis W1 during the movement of the belt conveyor 14 between the first and second operative configurations.

Thereby, during the movement controlled by the first movement device 35 to support the movable frames 18, 20 according to that described above, the second movement device 48 controls a further movement of the second mobile frame 20 given by the aforesaid rotation about the first axis W1, in particular in order to prevent the second movable frame 20 from knocking into the lateral wall 10 of the collection box 7.

Preferably, according to the embodiment illustrated in figure 5, the second movement device 48 is arranged in a connecting manner between the lever 36 of the first movement device 35 and the second movable frame 20.

Advantageously, the second movement device 48 comprises an articulated mechanism 48' mounted on the support structure 2, and in particular on the support mounting 40 of the latter and connected to the lever 36 and to the second movable frame 20.

Advantageously, the articulated mechanism 48', preferably of the toggle type, comprises a first arm 49 having a first end hinged to the support structure 2 and a second end connected to the lever 36; furthermore, the articulated mechanism 48' comprises a second arm 50 having a third end hinged to the second end of the first arm 49 by means of a connection pin 51 and a fourth end hinged to the second frame 20.

Preferably, the articulated mechanism 48' is of flat type and can be moved along a plane orthogonal to the first axis W1 and to the second axis W2.

Advantageously, the second moving device 48 comprises a cam guiding mechanism 52.

In particular, the aforesaid cam guiding mechanism 52 comprises a shaped guide 52' obtained in the lever 36 and a slider (not shown in the accompanying figures) slidingly inserted in the shaped guide 52' and fixed to the connection pin 51 to which the first and second arms 49, 50 of the articulated mechanism 48' are hinged.

According to a different embodiment not shown in the accompanying figures, the second movement device 48 comprises a second actuator, preferably linear, arranged to move the rotation of the second movable frame 20 about the first axis W1.

Preferably, the machine 1 comprises a level sensor (not shown in the accompanying figures) which is arranged at the outlet end 16 of the conveyor belt 14, and is adapted to detect when the fruit deposited in the collection box 7 reaches the level of the outlet end 16 to drive the movement means 17 to control the outlet end 16 to rise to a higher position.

In particular, such position sensor is operatively connected to a control unit of the machine 1, and is arranged to send to such control unit a warning signal when the level of the fruit in the connection box 7 reaches the outlet end 16 of the conveyor belt 14. Upon the reception of such a warning signal, the control unit sends a corresponding drive signal to the first movement device 35 to control the raising of the outlet end 16 of the conveyor belt 14 to a higher level.

Advantageously, the level sensor is connected to the slide 32 of the second movable frame 20 and is adapted to detect an upward rotation of such chute 32 due to the accumulation of fruit in the collection box 7 under the chute 32 itself.

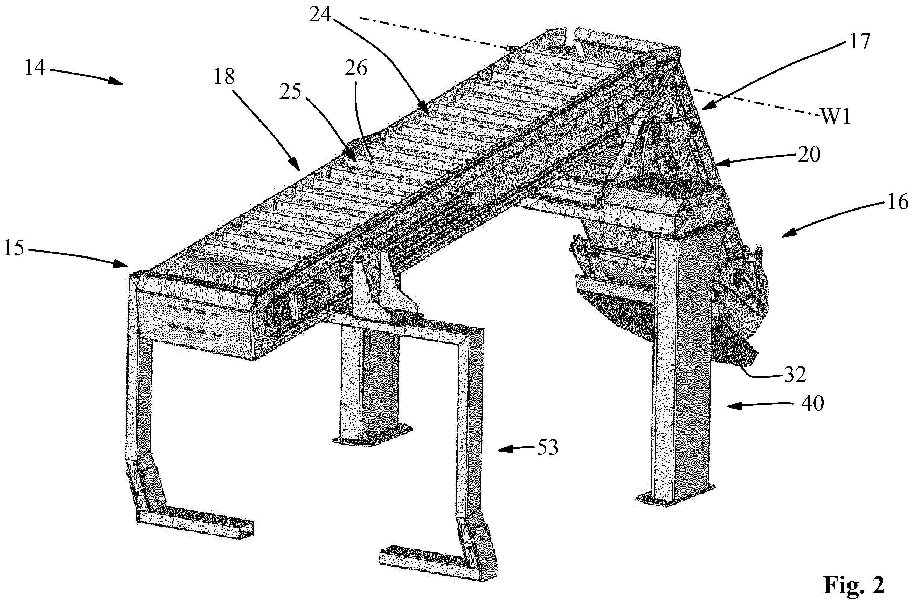

With reference to the embodiment shown in the figures 2-4, the machine 1 comprises a support frame 53 fixed to the support structure 2 and is slidingly mounted onto the first movable frame 18 in order to guide the movement of the latter during the movement of the belt conveyor 14 between the first and second operative configurations.

Preferably, the first movable frame 18 is slidingly constrained to the support frame 53 according to a sliding direction having at least one component parallel to a first extension direction X of the first movable frame 18 itself.

In particular, the sliding direction of the first movable frame 18 has at least one horizontal component and/or a vertical component.

Preferably, according to the embodiment shown in the accompanying figures, the sliding direction of the first movable frame 18 is substantially parallel to the first extension direction X of the first movable frame 18 itself.

Advantageously, the first movable frame 18 is provided with at least one longitudinal guide 54 extending along the aforesaid sliding direction, and in particular parallel to the first extension direction X. To the longitudinal guide 54 is slidingly constrained a runner 55 fixed to the aforesaid support frame 53 to allow the first movable frame 18 to slide with respect to the support frame 53.

Preferably, the first movable frame 18 comprises the aforesaid two longitudinal guides 54 (obtained, in particular, on the first two longitudinal side panels 27 of the first movable frame 18 itself) to which two corresponding runners 55 are slidingly constrained.

Arranging the first movable frame 18 sliding with respect to the support structure 2 and rotatably connected to the second movable frame 20 implies that both movable frames 18, 29, during the movement of the conveyor belt 14 between the first and second operative configurations, perform a corresponding translation movement having, in particular, at least one vertical component and/or at least one horizontal component.

This advantageously allows to displace the outlet end 16 of the second movable frame 20 from the bottom wall 9 to the access opening 12 of the collection box 7 maintaining the movable frames 18, 20 of the belt conveyor 14 at a relatively low level. Thereby, the vertical dimension of the belt conveyor 14 is significantly reduced during its movement, thus allowing the machine 1 to operate in easily between the orchard rows, in particular without the belt conveyor 14 knocking into the hail protections or nets which are normally arranged over the fruit trees.

Advantageously, the first movable frame 18 is rotatably connected to the support frame 53 according to a third axis W3, which is parallel to the aforesaid first axis W1.

In particular, the runner 55 of the support frame 53 is provided with a connection pin aligned with the third axis W3 and connected to the first movable frame 18 so that the latter can rotate about such a connection pin.

Preferably, the connection pin of the runner 55 is rotatably and slidingly inserted in the corresponding longitudinal guide 54 of the first movable frame 18.

Advantageously, as mentioned above, the movable belt 24 of the belt conveyor 14 is provided on the upper surface thereof with the aforesaid succession of seats 25 adapted to house the fruit to be conveyed to the collection box 7.

Preferably, the seats 25 of the movable belt 24 are delimited by the succession of protuberances 26 which define, in particular, a substantially undulatory pattern of the outer surface of the movable belt 24 itself.

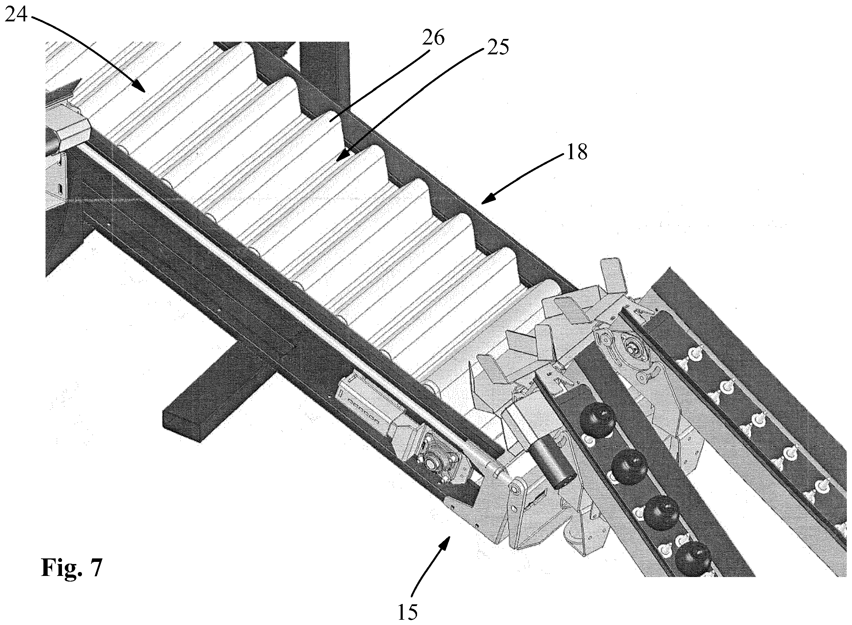

According to a first embodiment of the present invention shown in figure 7, the movable belt 24 comprises only one succession of alternating seats 25 and protuberances 26, with each seat 25 and each protuberance 26 extending transversally from one longitudinal edge to the other of the movable belt 24.

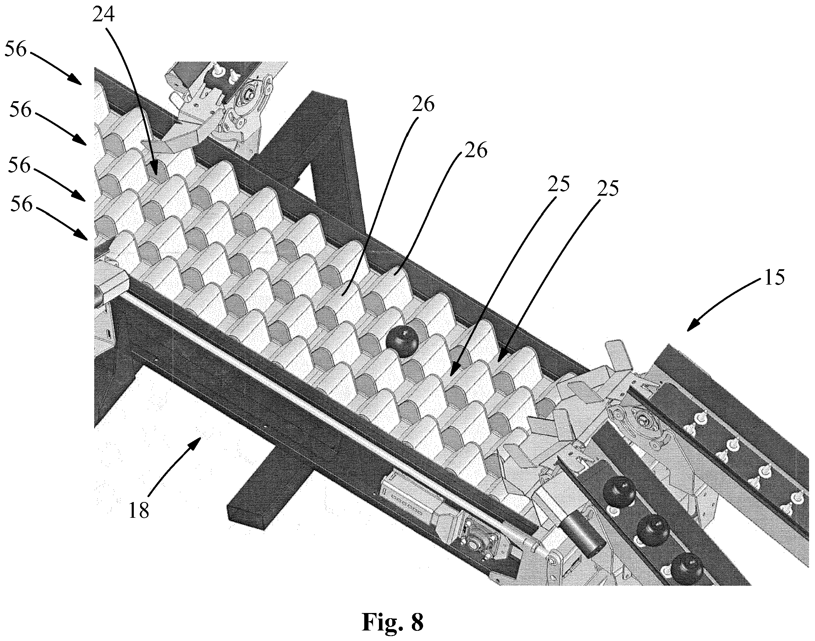

According to a second embodiment of the present invention shown in figure 8, the movable belt 24 comprises multiple longitudinal rows 56, parallel to one another and arranged side by side, of seats 25 and protuberances 26, with the protuberances 26 of each longitudinal row 56 offset with respect to the protuberances 26 of the longitudinal row 56 next to it, so as to define multiple seats 25 mutually separated by the protuberances 26 of the longitudinal rows 56 next to it between the longitudinal edges of the movable belt 24.

Advantageously, the machine 1 comprises multiple auxiliary conveyor belts 57 mounted on the support structure 2 and arranged to receive the fruit from the operators and to convey such fruit to the movable belt 24 at the first movable frame 18.

In particular, the aforesaid auxiliary conveyor belts 57 are arranged at the inlet end 15 of the belt conveyor 14, and preferably in a substantially intermediate position between the inlet end 15 and the first connection end 19 of the first movable frame 18.

It is a further object of the present invention a method for operating a machine 1 for harvesting fruit of the type described above.

Hereafter, reference will be made to the same terminology introduced thereto, although it is understood that the present method may also be achieved by means of machines not provided with all the features considered above.

The aforesaid method preferably comprises a step of arranging a collection box 7 on the support structure 2 of the machine 1, in particular on the abutting seat 13 of the support structure 2 itself.

The step of arranging the belt conveyor 14 in the first operative configuration by means of the movement means 17 is advantageously included, in which the outlet end 16 is arranged in the internal space 8 of the connection box 7 at the bottom wall 9 of the latter (as shown for example in figure 6A).

A step of driving the rotational base of the abutting seat 13 is preferably included to rotate the collection box 7.

A step of actuating the movable belt 24 of the belt conveyor 14 is also advantageously included to advance such a movable belt 24 along the movable frames 18, 20.

The operating method according to the invention includes a step of feeding the conveyor belt 14 with one or more pieces of fruit at the first movable frame 18.

Advantageously, in such a step of feeding, the fruit is deposited on the movable belt 24 at the inlet end 15 or in any point between the inlet end 15 and the first connection end 19 of the first movable frame 18.

Preferably, the operators arrange the fruit on the movable belt 24 by means of the auxiliary conveyor belts 57 on which the operators deposit the fruit and which convey such fruit to the conveyor belt 24 at the first movable frame 18.

Obviously the fruit can be deposited on the movable belt 24 of the belt conveyor 14 directly by the operators.

In the aforesaid step of feeding, the fruit is arranged inside the seats 25 of the movable belt 24 so that it can be conveyed towards the collection box 7, as described below.

A step of conveying the fruit to the outlet end 16 of the belt conveyor 14 is included, and at which outlet end 16 the fruit is released into the internal space 8 of the collection box 7.

In particular, the movable belt 24, by advancing along the movable frames 18, 20, conveys the fruit from the first movable frame 18 to the second movable frame 20 to take it to the outlet end 16, where it is released into the collection box 7 preferably by means of the brush 33 and the chute 32 of the second movable frame 20.

The concerned method includes, during the aforesaid step of conveying, at least one step of moving the belt conveyor 14 from the first operative configuration, in which the outlet end 16 of the belt conveyor 14 is in the internal space 8 of the collection box 7 at the bottom wall 9 thereof, to the second operative configuration, in which the outlet end 16 of said belt conveyor 14 is arranged at the access opening 12 of the collection box 7, as shown in the embodiments in figures 6A-6D.

Thereby, in particular upon the accumulation of the fruit in the collection box 7, the outlet end 16 of the belt conveyor 14 is controlled to raise gradually in order to arranged such an outlet end 16 over the upper layer of the fruit accumulated in the collection box 7 at a sufficiently small distance to prevent the falling of further fruit conveyed by the movable belt 24 from bruising the fruit itself.

Advantageously, during the step of moving the belt conveyor 14 from the first operative step to the second operative configuration, the belt conveyor 14 is arranged according to a movement line, traced by the first axis W1, having at least one vertical component and at least one horizontal component.

Preferably, the aforesaid movement line traced by the first axis W1 extends according to an arc of circumference having center, in particular, about the second axis W2 of the lever 36. The aforesaid step of moving the belt conveyor 14 is actuated by the movement means 17 of the machine 1.

In particular, in the aforesaid step of moving, the movement means 17 are driven, for example by the control unit of the machine 1, for controlling the belt conveyor 14 to move according to the aforesaid movement line.

According to the embodiment shown in the accompanying figures, the first actuator 43 of the first movement device 35 is operated for controlling the lever 36 about the second axis W2 in a given sense of rotation (counterclockwise in the particular embodiment shown in figures 6A-6D).

Advantageously, the step of moving the belt conveyor 14 includes moving the latter in a progressive manner in subsequent steps, so as to lift the outlet end 16, in particular, to different levels taking the outlet end 16 itself to a higher level that the previous level whenever the upper layer of the fruit substantially reaches the outlet end 16.

Preferably, when the level sensor (placed at the outlet end 16) detects that the fruit arranged in the collection box 7 has reached the level of the outlet end 16, it controls, in particular, by means of the control unit the first movement device 35 for raising the outlet end 16 to a higher level.

According to the idea underling the present invention, during the moving of the conveyor belt 14 from the first operative configuration to the second operative configuration, the second movable frame 20 is driven to move according to at least one trajectory having at least one vertical component and at least one horizontal component, in order, in particular, to maintain the second movable frame 20 in the access opening 12 of the collection box 7, thus preventing that the second movable frame 20 itself from knocking into the lateral wall 10 of the collection box 7.

During the movement of the belt conveyor 14 from the first to the second operative configuration, the second movable frame 20 is actuated to rotate with respect to the first movable frame 18 about the first axis W1.

During the step of moving the belt conveyor 14 from the first operative configuration to the second operative configuration, the first movable frame 18 is driven to translate according to a sliding direction having preferably at least one component parallel to a first extension direction X of the first movable frame 18 itself.

Preferably, during the step of moving the belt conveyor 14, each movable frame 18, 20 performs a corresponding translation movement, each having at least one vertical component and/or at least one horizontal component.

In particular, the second movable frame 20 is actuated to translate on a movement plane which is parallel to the sliding direction of the first movable frame 18 and to the extension directions X, Y of the movable frames 18, 20, and at the same time is actuated to rotate about the first movable frame 18 about the first axis W1.

As mentioned above, it advantageously allows the belt conveyor 14 to move between the first and second operative configurations by occupying a small vertical dimension, allowing, in particular, the latter to operate without knocking into the hail protections or nets arranged over the trees of the orchard.

Advantageously, during the step of moving the belt conveyor 14 from the first operative configuration to the second operative configuration, the first movable frame 18 is actuated to rotate about the third axis W3 during its translation movement so as to follow the aforesaid movement line traced by the first axis W1, in particular.

As shown, in particular, in the embodiments in figures 6A-6D, during the raising of the outlet end 16 of the belt conveyor 14, the inclination of the second movable frame 20 is varied by rotating it about the first axis W1.

In particular, when the first actuator 43 of the first movement device 35 controls the lever 36 to rotate about the second axis W2, the slider of the cam guiding device 52 is slid within the shaped guide 52', by moving, in turn, the second arm 50 of the articulated mechanism 48', which in turn controls the rotation of the second movable frame 20 about the first axis W1. Advantageously, during the movement of the belt conveyor 14 from the first operative configuration to the second operative configuration, the outlet end 16 is driven to move upwards along a path having at least one moving-away section, in which the outlet end 16 is moved away from the lateral wall 10 of the collection box 7 going, in particular, towards the center of the internal space 8 of the collection box 7, and having at last one approaching section, in which the outlet end 16 is moved closer to the lateral wall 10.

In particular, the outlet end 16 of the conveyor belt 14 follows a path according to a broken or curved line (on a vertical plane parallel to the extension directions X, Y of the movable frames 18, 20) moving away and approaching (at least once) the lateral wall 10 of the collection box 7.

Advantageously, when the belt conveyor 14 is in the first operative configuration, the outlet end 16 (arranged at the bottom wall 9 of the collection box 7) is positioned near the lateral wall 10 of the collection box 7, and then, upon the accumulation of fruit in the collection box 7 itself, the outlet end 16, during its raising, is moved towards the center and thus returned towards the side wall 10 again.

In particular, the outlet end 16 follows (from the first to the second operative configuration) a path according to substantially "S"-shaped curved line.

Thereby, the outlet end 16 of the belt conveyor 14 is advantageously positioned approaching the lateral wall 10 of the collection box 7 to unload (initially, for example, onto the bottom wall 9 of the collection box 7) the fruit more peripherally thus allowing to fill also the corners of the internal space 8 of the collection box 7 itself. The outlet end 16 is then pushed towards the center of the internal space 8 (away from the lateral wall 10) to fill also the central volume of the internal space 8 of the collection box 7. Such sequence can be advantageously repeated once or twice when the outlet end 16 is taken from its maximum level with belt conveyor 14 arranged in the second operative configuration.

This allows to improve the filling uniformity of the collection box 7, thus increasing the amount of fruit arranged in each collection box 7 with respect to the machines of known type in which the outlet end of the belt conveyor performs a rectilinear movement. Advantageously, according to the aforesaid step of moving, the movement means 17 control the movement of the belt conveyor 14 to take the latter to the second operative configuration when the collection box 7 is substantially completely filled with fruit, by arranging the outlet end 16 at the maximum level, in particular over the access opening 12 of the collection box 7 itself (as shown in the example in figure 6D).

A step of picking from the filled collection box 7 is then included, in which the rotational base of the abutting seat 13 of the supporting structure 2 is stopped and the collection box 7 is removed from the machine 1 to be replaced preferably with a new collection box 7 to be filled.

Advantageously, during the aforesaid steps of the concerned method, the machine 1 can be driven to advance on the ground, e.g. along the orchard rows, to approach the trees from which the operators pick the fruit to be conveyed into the collection box 7.

Therefore, the invention thus described achieves the predetermined objects.

## Claims

1. Machine (1) for harvesting fruit, which comprises:
- a support structure (2) intended to be abutted against the ground;
- at least one collection box (7), which is positioned on said support structure (2), is provided with an internal space (8) and comprises a bottom wall (9) placed to close the bottom of said internal space (8), a lateral wall (10) extended from the bottom wall (9) to close the side of said internal space (8), and an upper edge (11) delimiting an access opening (12) to said internal space (8);
- a belt conveyor (14) mounted on said support structure (2) and extended between an inlet end (15) and an outlet end (16) from which multiple pieces of fruit are susceptible of being deposited in the internal space (8) of said collection box (7);
- movement means (17) operatively connected to said belt conveyor (14) and arranged for moving said belt conveyor (14) between a first operative configuration, in which the outlet end (16) of said belt conveyor (14) is arranged in the internal space (8) of said collection box (7) at the bottom wall (9) of said collection box (7), and a second operative configuration, in which the outlet end (16) of said belt conveyor (14) is arranged at the access opening (12) of said collection box (7);
said belt conveyor (14) comprising:
- a first movable frame (18) extended along a first extension direction (X) between said inlet end (15) and a first connection end (19);
- a second movable frame (20) extended along a second extension direction (Y) between said outlet end (16) and a second connection end (21) constrained to the first connection end (19) of said first movable frame (18);
said movement means (17) being arranged for driving, between said first operative configuration and said second operative configuration of said belt conveyor (14), at least said second movable frame (20) to be moved according to at least one trajectory having at least one vertical component and at least one horizontal component;
wherein the second connection end (21) of said second movable frame (20) is rotatably constrained to the first connection end (19) of said first movable frame (18) around a first axis (W1);
said movement means (17) being arranged for driving said second movable frame (20) to rotate around said first axis (W1) between said first operative configuration and said second operative configuration of said belt conveyor (14);
said machine (1) being **characterized in that** it comprises a support frame (53) fixed to said support structure (2) and carrying said first movable frame (18) in a slidingly mounted manner to guide the movement of said first movable frame (18) during the movement of said belt conveyor (14) between said first operative configuration and said second operative configuration.

2. Machine (1) according to claim 1, **characterized in that** said first movable frame (18) is slidingly constrained to said support frame (53) according to a sliding direction having at least one component parallel to a first extension direction (X) of said first movable frame (18).

3. Machine (1) according to claim 1 or 2, **characterized in that** said first movable frame (18) is rotatably constrained to said support frame (53) according to a third axis (W3) parallel to said first axis (W1).

4. Machine (1) according to any one of the preceding claims, **characterized in that** said first axis (W1) is orthogonal to the extension directions (X, Y) of said movable frames (18, 20) and is arranged horizontally.

5. Machine (1) according to any one of the preceding claims, **characterized in that** said belt conveyor comprises (14):
- a first rotatable roller (22) mounted on said first movable frame (18) and arranged at said inlet end (15);
- a second rotatable roller (23) mounted on said second movable frame (20) and arranged at said outlet end (16);
- a movable belt (24) extended between the inlet end (15) and the outlet end (16) of said belt conveyor (14) and wound around said first rotatable roller (22) and said second rotatable roller (23).

6. Machine (1) according to any one of the preceding claims, **characterized in that** said first movable frame (18) is rotatably constrained to said second movable frame (20) by means of at least one first pin (34) aligned with said first axis (W1);
said movement means (17) comprising at least one first movement device (35) connected to said first pin (34) and arranged for moving said first pin (34) along a movement line having at least one vertical component and at least one horizontal component between said first and said second operative configurations of said belt conveyor (14).

7. Machine (1) according to claim 6, **characterized in that** said first movement device (35) comprises:
- at least one lever (36) provided with a first portion (37) hinged to said support structure (2) around a second axis (W2) parallel to said first axis (W1), and provided with a second portion (38) connected to the first pin (34) of said belt conveyor (14);
- at least one first actuator (43) mechanically connected to said lever (36) and adapted to drive said lever (36) to rotate around said second axis (W2) in order to move said first pin (34) along said movement line extended according to at least one arc of circumference with center in said second axis (W2).

8. Machine (1) according to claim 6 or 7, **characterized in that** said movement means (17) comprise a second movement device (48) hinged to said second movable frame (20) and adapted to drive said second movable frame (20) to rotate around said first axis (W1).

9. Machine (1) according to claim 8, **characterized in that** said second movement device (48) comprises at least one cam guide mechanism (52).

10. Method for operating a machine for harvesting fruit according to claim 1, such method comprising:
- a step of feeding said belt conveyor (14) with one or more pieces of fruit at said first movable frame (18);
- a step of conveying said pieces of fruit to the outlet end (16) of said belt conveyor (14), and at such outlet end (16) said pieces of fruit are released into the internal space (8) of said collection box (7);
- a step of moving said belt conveyor (14) from a first operative configuration, in which the outlet end (16) of said belt conveyor (14) is arranged in said internal space (8) at the bottom wall (9) of said collection box (7), to a second operative configuration, in which the outlet end (16) of said belt conveyor (14) is arranged at the access opening (12) of said collection box (7);
during said step of moving said belt conveyor (14), said second movable frame (20) being driven to be moved according to at least one trajectory having at least one vertical component and at least one horizontal component;
during said step of moving said belt conveyor (14) from said first operative configuration to said second operative configuration, said second movable frame (20) being driven to rotate with respect to said first movable frame (18) around said first axis (W1);
said method being **characterized in that**, during said step of moving said belt conveyor (14) from said first operative configuration to said second operative configuration, said first movable frame (18) is driven to translate according to a sliding direction having at least one component parallel to a first extension direction (X) of said first movable frame (18).

11. Method according to claim 10, **characterized in that** during said step of moving said belt conveyor (14) from said first operative configuration to said second operative configuration, said first movable frame (18) is driven to rotate about a third axis (W3) parallel to said first axis (W1).

12. Method according to claim 10 or 11, **characterized in that** said first axis (W1) is orthogonal to the extension directions (X, Y) of said movable frames (18, 20) and is arranged horizontally.

13. Method according to any one of the preceding claims from 10 to 12, **characterized in that** during said step of moving said belt conveyor (14) from said first operative configuration to said second operative configuration, said belt conveyor (14) is moved according to a movement line, defined by said first axis (W1), having at least one vertical component and at least one horizontal component.

14. Method according to claim 13, **characterized in that** said movement line is extended according to at least one arc of circumference.

15. Method according to any one of the preceding claims 10 to 14, **characterized in that** during the movement of said belt conveyor (14) from said first operative configuration to said second operative configuration, the outlet end (16) of said belt conveyor (14) is driven to be moved upward along a path having at least one moving-away section, in which said outlet end (16) is moved away from the lateral wall (10) of said collection box (7), and having at least one approaching section, in which said outlet end (16) is moved closer to the lateral wall (10) of said collection box (7).

## Patentansprüche

1. Maschine (1) zum Ernten von Obst, die Folgendes umfasst:
- eine Trägerstruktur (2), die dazu bestimmt ist, an den Untergrund anzugrenzen;
- mindestens einen Sammelbehälter (7), der auf der genannten Trägerstruktur (2) positioniert, mit einem Innenraum (8) ausgestattet ist und eine Bodenwand (9) zum Schließen der Unterseite des genannten Innenraums (8), eine von der Bodenwand (9) verlaufende Seitenwand (10) zum Schließen der Seite des genannten Innenraums (8) und einen oberen Rand (11), der eine Zugangsöffnung (12) zu dem genannten Innenraum (8) begrenzt, umfasst;
- ein auf der genannten Trägerstruktur (2) montiertes Förderband (14), das zwischen einem Eingangsende (15) und einem Ausgangsende (16), von dem aus zahlreiche Stücke Obst in den Innenraum (8) des genannten Sammelbehälter (7) gelegt werden können, verläuft;
- operativ mit dem genannten Förderband (14) verbundene Bewegungselemente (17), die so angeordnet sind, dass sie das genannte Förderband (14) zwischen einer ersten Arbeitskonfiguration, in der das Ausgangsende (16) des genannten Förderbands (14) in dem Innenraum (8) des genannten Sammelbehälters (7) an der Bodenwand (9) des Sammelbehälters (7) angeordnet ist, und einer zweiten Arbeitskonfiguration, in der das Ausgangsende (16) des genannten Förderbands (14) an der Zugangsöffnung (12) des genannten Sammelbehälters (7) angeordnet ist, bewegt;
wobei das genannte Förderband (14) Folgendes umfasst:
- einen zwischen einer ersten Verlaufsrichtung (X) zwischen dem genannten Eingangsende (15) und einem ersten Verbindungsende (19) verlaufenden ersten beweglichen Rahmen (18);
- einen zweiten entlang einer zweiten Verlaufsrichtung (Y) zwischen dem genannten Ausgangsende (16) und einem zweiten Verbindungsende (21) verlaufenden beweglichen Rahmen (20), der an dem ersten Verbindungsende (19) des ersten beweglichen Rahmens (18) befestigt ist;
wobei die genannten Bewegungselemente (17) so angeordnet sind, dass sie zwischen der genannten ersten Arbeitskonfiguration und der genannten zweiten Arbeitskonfiguration des genannten Förderbands (14) mindestens den genannten zweiten beweglichen Rahmen (20) antreiben, um diesen entlang mindestens einer Bahn zu bewegen, die mindestens eine vertikale Komponente und mindestens eine horizontale Komponente aufweist;
wobei das genannte zweite Verbindungsende (21) des genannten zweiten beweglichen Rahmens (20) drehbar an dem ersten Verbindungsende (19) des genannten ersten beweglichen Rahmens (18) um eine erste Achse (W1) befestigt ist;
wobei die genannten Bewegungselemente (17) so angeordnet sind, dass sie den genannten zweiten beweglichen Rahmen (20) um die genannte erste Achse (W1) zwischen der genannten ersten Arbeitskonfiguration und der genannten zweiten Arbeitskonfiguration des genannten Förderbands (14) in Drehung versetzen;
wobei die genannte Maschine (1) **dadurch gekennzeichnet ist, dass** sie einen an der genannten Trägerstruktur (2) befestigten Trägerrahmen (53) umfasst, der den genannten ersten beweglichen Rahmen (18) verschiebbar montiert trägt, um die Bewegung des genannten ersten beweglichen Rahmens (18) während der Bewegung des genannten Förderbands (14) zwischen der genannten ersten Arbeitskonfiguration und der genannten zweiten Arbeitskonfiguration zu führen.

2. Maschine (1) nach Anspruch 1, **dadurch gekennzeichnet, dass** der erste bewegliche Rahmen (18) gleitend an dem genannten Trägerrahmen (53) in einer Gleitrichtung befestigt ist, die mindestens eine zu einer ersten Verlaufsrichtung (X) des genannten ersten beweglichen Rahmens (18) parallele Komponente aufweist.

3. Maschine (1) nach Anspruch 1 oder 2, **dadurch gekennzeichnet, dass** der genannte erste bewegliche Rahmen (18) drehbar an dem genannten Trägerrahmen (53) entlang einer dritten Achse (W3) parallel zu der genannten ersten Achse (W1) befestigt ist.

4. Maschine (1) nach einem beliebigen der vorangegangenen Ansprüche, **dadurch gekennzeichnet, dass** die genannte erste Achse (W1) rechtwinklig zu den Verlaufsrichtungen (X, Y) der genannten beweglichen Rahmen (18, 20) und horizontal angeordnet ist.

5. Maschine (1) nach einem beliebigen der vorangegangenen Ansprüche, **dadurch gekennzeichnet, dass** das genannte Förderband (14) Folgendes umfasst:
- eine auf dem genannten ersten beweglichen Rahmen (18) montierte erste drehbare Rolle (22), die an dem genannten Eingangsende (15) angeordnet ist;
- eine auf dem genannten zweiten beweglichen Rahmen (20) montierte zweite drehbare Rolle (23), die an dem genannten Ausgangsende (16) angeordnet ist;
- einen zwischen dem Eingangsende (15) und dem Ausgangsende (16) des genannten Förderbands (14) verlaufenden und um die genannte erste drehbare Rolle (22) und die genannte zweite drehbare Rolle (23) gewundenen beweglichen Riemen (24).

6. Maschine (1) nach einem beliebigen der vorangegangenen Ansprüche, **dadurch gekennzeichnet, dass** der genannte erste bewegliche Rahmen (18) mittels mindestens eines, mit der genannten ersten Achse (W1) ausgerichteten ersten Bolzens (34) drehbar an dem genannten zweiten beweglichen Rahmen (20) befestigt ist;
wobei die genannten Bewegungselemente (17) mindestens eine mit dem genannten ersten Bolzen (34) verbundene erste Bewegungsvorrichtung (35) umfassen, die so angeordnet ist, dass der genannte erste Bolzen (34) entlang einer Bewegungslinie mit mindestens einer vertikalen Komponente und mindestens einer horizontalen Komponente zwischen der genannten ersten und der genannten zweiten Arbeitskonfiguration des genannten Förderbands (14) bewegt wird.

7. Maschine (1) nach Anspruch 6, **dadurch gekennzeichnet, dass** die erste Bewegungsvorrichtung (35) Folgendes umfasst:
- mindestens einen mit einem an der genannten Trägerstruktur (2) um eine zweite Achse (W2) parallel zu der genannten ersten Achse (W1) gelagerten ersten Abschnitt (37) und einen mit dem ersten Bolzen (34) des genannten Förderbands (14) verbundenen zweiten Abschnitt (38) ausgestatteten Hebel (36);
- mindestens einen mechanisch mit dem genannten Hebel (36) verbundenen ersten Stellantrieb, der geeignet ist, den genannten Hebel (36) um die genannte zweite Achse (W2) in Drehung zu versetzen, um den genannten ersten Bolzen (34) entlang der nach mindestens einem Kreisbogen mit Mittelpunkt in der genannten zweiten Achse (W2) verlaufenden Bewegungslinie zu bewegen.

8. Maschine (1) nach Anspruch 6 oder 7, **dadurch gekennzeichnet, dass** die genannten Bewegungselemente (17) eine zweite Bewegungsvorrichtung (48) umfassen, die an dem genannte zweiten beweglichen Rahmen (20) gelagert und geeignet ist, den genannten zweiten beweglichen Rahmen (20) um die genannte erste Achse (W1) in Drehung zu versetzen.

9. Maschine (1) nach Anspruch 8, **dadurch gekennzeichnet, dass** die genannte zweite Bewegungsvorrichtung (48) mindestens einen Nockenführungsmechanismus (52) umfasst.

10. Verfahren zum Betreiben einer Maschine zum Ernten von Obst nach Anspruch 1, wobei dieses Verfahren Folgendes umfasst:
- einen Schritt des Beschickens des genannten Förderbands (14) mit einem oder mehreren Stücken Obst an dem genannten ersten beweglichen Rahmen (18);
- einen Schritt des Beförderns der genannten Stücke Obst zum Ausgangsende (16) des genannten Förderbands (14), wobei an diesem Ausgangsende (16) die genannten Stücke Obst in den Innenraum (8) des genannten Sammelbehälters (7) freigegeben werden;
- einen Schritt des Bewegens des genannten Förderbands aus einer ersten Arbeitskonfiguration, in der das Ausgangsende (16) des genannten Förderbands (14) in dem genannten Innenraum an der Bodenwand (9) des genannten Sammelbehälters (7) angeordnet ist, in eine zweite Arbeitskonfiguration, in der das Ausgangsende (16) des genannten Förderbands (14) an der Zugangsöffnung (12) des genannten Sammelbehälters (7) angeordnet ist;
wobei während des genannten Schritts des Bewegens des genannten Förderbands (14) der genannte zweite bewegliche Rahmen (20) angetrieben wird, um mindestens entlang einer Bahn mit mindestens einer vertikalen Komponente und mindestens einer horizontalen Komponente bewegt zu werden;
wobei bei dem genannten Schritt des Bewegens des genannten Förderbands (14) aus der genannten ersten Arbeitskonfiguration in die genannte zweite Arbeitskonfiguration der genannte zweite bewegliche Rahmen (20) angetrieben wird, um sich im Verhältnis zu dem genannten ersten beweglichen Rahmen (18) um die genannte erste Achse (W1) zu drehen;
wobei das genannte Verfahren **dadurch gekennzeichnet ist, dass** während des genannten Schritts des Bewegens des genannten Förderbands (14) aus der genannten ersten Arbeitskonfiguration in die genannte zweite Arbeitskonfiguration der genannte erste beweglichen Rahmen (18) angetrieben wird, um gemäß einer Gleitrichtung mit mindestens einer zu der ersten Verlaufsrichtung (X) des genannten ersten beweglichen Rahmens (18) parallelen Komponente versetzt zu werden.

11. Verfahren nach Anspruch 10, **dadurch gekennzeichnet, dass** während des genannten Schritts des Bewegens des genannten Förderbands (14) aus der genannten ersten Arbeitskonfiguration in die genannte zweite Arbeitskonfiguration der genannte erste bewegliche Rahmen (18) angetrieben wird, um sich um eine zu der genannten ersten Achse (W1) parallele dritte Achse (W3) zu drehen.

12. Verfahren nach Anspruch 10 oder 11, **dadurch gekennzeichnet, dass** die genannte erste Achse (W1) rechtwinklig zu den Verlaufsrichtungen (X, Y) der genannten beweglichen Rahmen (18, 20) und horizontal angeordnet ist.

13. Verfahren nach einem der vorangegangenen Ansprüche 10 bis 12, **dadurch gekennzeichnet, dass** während des genannten Schritts des Bewegens des genannten Förderbands (14) aus der genannten ersten Arbeitskonfiguration in die genannte zweite Arbeitskonfiguration das genannte Förderband (14) gemäß einer von der genannten erste Achse (W1) definierten Bewegungslinie bewegt wird, die mindestens eine vertikale Komponente und mindestens eine horizontale Komponente aufweist.

14. Verfahren nach Anspruch 13, **dadurch gekennzeichnet, dass** die genannte Bewegungslinie nach mindestens einem Kreisbogen verläuft.

15. Verfahren nach einem beliebigen der vorangegangenen Ansprüche 10 bis 14, **dadurch gekennzeichnet, dass** während der Bewegung des genannten Förderbands (14) aus der genannten ersten Arbeitskonfiguration in die genannte zweite Arbeitskonfiguration das Ausgangsende (16) des genannten Förderbands (14) angetrieben wird, um entlang eines Pfads, nach oben bewegt zu werden, der mindestens einen sich entfernenden Abschnitt, in dem das genannte Ausgangsende (16) von der Seitenwand (10) des genannten Sammelbehälters (7) wegbewegt wird, und mindestens einen sich annähernden Abschnitt, in dem das genannte Ausgangsende (16) an die Seitenwand (10) des genannten Sammelbehälters (7) angenähert wird, aufweist.

## Revendications

1. Dispositif (1) pour la récolte de fruits, comprenant :
- une structure de support (2) prévue pour venir en butée contre le sol ;
- au moins un bac de collecte (7), positionné sur ladite structure de support (2), pourvu d'un espace interne (8) et comprenant une paroi de fond (9) placée pour fermer le fond dudit espace interne (8), une paroi latérale (10) s'étendant de la paroi de fond (9) pour fermer le côté dudit espace interne (8) et un bord supérieur (11) délimitant une ouverture d'accès (12) audit espace interne (8) ;
- un convoyeur à bande (14) monté sur ladite structure de support (2) et s'étendant entre une extrémité d'entrée (15) et une extrémité de sortie (16) à partir duquel plusieurs fruits sont susceptibles d'être déposés dans l'espace interne (8) dudit bac de collecte (7);
- des moyens de mouvement (17) fonctionnellement connectés audit convoyeur à bande (14) et arrangés pour mettre en mouvement ledit convoyeur à bande (14) entre une première configuration fonctionnelle, dans laquelle l'extrémité de sortie (16) dudit convoyeur à bande (14) est arrangée dans l'espace interne (8) dudit bac de collecte (7) sur la paroi de fond (9) dudit bac de collecte (7), et une deuxième configuration fonctionnelle, dans laquelle l'extrémité de sortie (16) dudit convoyeur à bande (14) est arrangée sur l'ouverture d'accès (12) dudit bac de collecte (7) ;
ledit convoyeur à bande (14) comprenant :
- un premier cadre mobile (18) s'étendant le long d'une première direction d'extension (X) entre ladite extrémité d'entrée (15) et une première extrémité de connexion (19) ;
- un deuxième cadre mobile (20) s'étendant le long d'une deuxième direction d'extension (Y) entre ladite extrémité de sortie (16) et une deuxième extrémité de connexion (21) fixée à la première extrémité de connexion (19) dudit premier cadre mobile (18) ;
lesdits moyens de mouvement (17) étant arrangés pour commander, entre ladite première configuration fonctionnelle et ladite deuxième configuration fonctionnelle dudit convoyeur à bande (14) au moins ledit deuxième cadre mobile (20) afin de le mettre en mouvement selon au moins une trajectoire ayant au moins un composant vertical et au moins un composant horizontal ;
dans lequel la deuxième extrémité de connexion (21) dudit deuxième cadre mobile (20) est fixée de façon rotative à la première extrémité de connexion (19) dudit premier cadre mobile (18) autour d'un premier axe (W1) ;
lesdits moyens de mouvement (17) étant arrangés pour commander ledit deuxième cadre mobile (20) en rotation autour dudit premier axe (W1) entre ladite première configuration fonctionnelle et ladite deuxième configuration fonctionnelle dudit convoyeur à bande (14) ;
ledit dispositif (1) étant **caractérisé en ce qu'**il comprend un cadre de support (53) fixé à ladite structure de support (2) et portant ledit premier cadre mobile (18) de manière coulissante pour guider le mouvement dudit premier cadre mobile (18) durant le mouvement dudit convoyeur à bande (14) entre ladite première configuration fonctionnelle et ladite deuxième configuration fonctionnelle.

2. Dispositif (1) selon la revendication 1, **caractérisé en ce que** ledit premier cadre mobile (18) est fixé de façon coulissante audit cadre de support (53) selon une direction de coulissement ayant au moins un composant parallèle à une première direction d'extension (X) dudit premier cadre mobile (18).

3. Dispositif (1) selon la revendication 1 ou 2, **caractérisé en ce que** ledit premier cadre mobile (18) est fixé de façon rotative audit cadre de support (53) selon un troisième axe (W3) parallèle audit premier axe (W1).

4. Dispositif (1) selon l'une quelconque des revendications précédentes, **caractérisé en ce que** ledit premier axe (W1) est orthogonal aux directions d'extension (X, Y) desdits cadres mobiles (18, 20) et est arrangé horizontalement.

5. Dispositif (1) selon l'une quelconque des revendications précédentes, **caractérisé en ce que** ledit convoyeur à bande (14) comprend :
- un premier galet rotatif (22) monté sur ledit premier cadre mobile (18) et arrangé sur ladite extrémité d'entrée (15) ;
- un deuxième galet rotatif (23) monté sur ledit deuxième cadre mobile (20) et arrangé sur ladite extrémité de sortie (16) ;
- une bande mobile (24) s'étendant entre l'extrémité d'entrée (15) et l'extrémité de sortie (16) dudit convoyeur à bande (14) et enroulée autour dudit premier galet rotatif (22) et dudit deuxième galet rotatif (23).

6. Dispositif (1) selon l'une quelconque des revendications précédentes, **caractérisé en ce que** ledit premier cadre mobile (18) est fixé de façon rotative audit deuxième cadre mobile (20) au moyen d'au moins une première goupille (34) alignée sur ledit premier axe (W1) ;
lesdits moyens de mouvement (17) comprenant au moins un premier dispositif de mouvement (35) connecté à ladite première goupille (34) et arrangé pour mettre en mouvement ladite première goupille (34) le long d'une ligne de mouvement ayant au moins un composant vertical et au moins un composant horizontal entre ladite première et ladite deuxième configuration fonctionnelle dudit convoyeur à bande (14).

7. Dispositif (1) selon la revendication 6, **caractérisé en ce que** ledit premier dispositif de mouvement (35) comprend :
- au moins un levier (36) muni d'une première partie (37) articulée sur ladite structure de support (2) autour du deuxième axe (W2) parallèle audit premier axe (W1) et muni d'une deuxième partie (38) connectée à la première goupille (34) dudit convoyeur à bande (14) ;
- au moins un premier actionneur (43) mécaniquement raccordé audit levier (36) et apte à commander ledit levier (36) en rotation autour dudit deuxième axe (W2) afin de mettre en mouvement ladite première goupille (34) le long de ladite ligne de mouvement étendue selon au moins un arc de circonférence avec centre sur ledit deuxième axe (W2).

8. Dispositif (1) selon la revendication 6 ou 7, **caractérisé en ce que** lesdits moyens de mouvement (17) comprennent un deuxième dispositif de mouvement (48) articulé sur ledit deuxième cadre mobile (20) et apte à commander ledit deuxième cadre mobile (20) en rotation autour dudit premier axe (W1).

9. Dispositif (1) selon la revendication 8, **caractérisé en ce que** ledit deuxième dispositif de mouvement (48) comprend au moins un mécanisme de guidage à cames (52).

10. Procédé pour le fonctionnement d'un dispositif pour la récolte de fruits, selon la revendication 1, ledit procédé comprenant :
- une étape d'alimentation dudit convoyeur à bande (14) en un ou plusieurs fruits audit premier cadre mobile (18) ;
- une étape de transport desdits fruits vers l'extrémité de sortie (16) dudit convoyeur à bande (14) et à ladite extrémité de sortie (16) lesdits fruits sont déversés dans l'espace interne (8) dudit bac de collecte (7) ;
- une étape de mise en mouvement dudit convoyeur à bande (14) de la première configuration fonctionnelle, dans laquelle l'extrémité de sortie (16) dudit convoyeur à bande (14) est arrangée dans ledit espace interne (8) sur la paroi de fond (9) dudit bac de collecte (7), vers une deuxième configuration fonctionnelle, dans laquelle l'extrémité de sortie (16) dudit convoyeur à bande (14) est arrangée sur l'ouverture d'accès (12) dudit bac de collecte (7) ;
durant ladite étape de mise en mouvement dudit convoyeur à bande (14), ledit deuxième cadre mobile (20) étant commandé en mouvement selon au moins une trajectoire ayant au moins un composant vertical et au moins un composant horizontal ;
durant ladite étape de mise en mouvement dudit convoyeur à bande (14) de ladite première configuration fonctionnelle vers ladite deuxième configuration fonctionnelle, ledit deuxième cadre mobile (20) étant commandé en rotation par rapport audit premier cadre mobile (18) autour dudit premier axe (W1) ;
ledit procédé étant **caractérisé en ce que**, durant ladite étape de mouvement dudit convoyeur à bande (14) de ladite première configuration fonctionnelle à ladite deuxième configuration fonctionnelle, ledit premier cadre mobile (18) est commandé en translation selon une direction de coulissement ayant au moins un composant parallèle à une première direction d'extension (X) dudit premier cadre mobile (18).

11. Procédé selon la revendication 10, **caractérisé en ce que** durant ladite étape de mise en mouvement dudit convoyeur à bande (14) de ladite première configuration fonctionnelle à ladite deuxième configuration fonctionnelle, ledit premier cadre mobile (18) est commandé en rotation autour d'un troisième axe (W3) parallèle audit premier axe (W1).

12. Procédé selon la revendication 10 ou 11, **caractérisé en ce que** ledit premier axe (W1) est orthogonal aux directions d'extension (X, Y) desdits cadres mobiles (18, 20) et est arrangé horizontalement.

13. Procédé selon l'une quelconque des revendications précédentes de 10 à 12, **caractérisé en ce que** durant ladite étape de mise en mouvement dudit convoyeur à bande (14) de ladite première configuration fonctionnelle à ladite deuxième configuration fonctionnelle, ledit convoyeur à bande (14) est mis en mouvement selon une ligne de mouvement, définie par ledit premier axe (W1), ayant au moins un composant vertical et au moins un composant horizontal.

14. Procédé selon la revendication 13, **caractérisé en ce que** ladite ligne de mouvement s'étend selon au moins un arc de circonférence.

15. Procédé selon l'une quelconque des revendications précédentes de 10 à 14, **caractérisé en ce que** durant le mouvement dudit convoyeur à bande (14) de ladite première configuration fonctionnelle à ladite deuxième configuration fonctionnelle, l'extrémité de sortie (16) dudit convoyeur à bande (14) est commandée en mouvement vers le haut le long d'un parcours ayant au moins une section d'éloignement, dans laquelle ladite extrémité de sortie (16) est éloignée de la paroi latérale (10) dudit bac de collecte (7) et ayant au moins une section d'approche, dans laquelle ladite extrémité de sortie (16) est déplacée plus près de la paroi latérale (10) dudit bac de collecte (7).
